# FASCICULE DE BREVET EUROPEEN

(11) **EP 1 995 112 B1**
(45) Date de publication et mention de la délivrance du brevet: **04.08.2010**
(21) Numéro de dépôt: 08300211.3
(22) Date de dépôt: 21.05.2008
(51) Int. Cl.: B60N 2/28

(54) **Rehausseur de siège de véhicule**
Zusatzsitz für einen Fahrzeugsitz
Booster seat for a vehicle seat

(30) Priorité: 22.05.2007 FR 0755174
(43) Date de publication de la demande: 26.11.2008
(73) Titulaire: Knauf Industries Gestion, 68600 Wolfgantzen (FR)
(72) Inventeur: Beinert, Gérard, 67115, PLOBSHEIM (FR); Launay, Jacques, 68180, HORBOURG-WIHR (FR)
(74) Mandataire: Herrburger, Pierre

(56) Documents cités:
- DE-A1- 3 020 949
- FR-A- 2 883 813
- US-A1- 2001 000 638
- US-B1- 6 676 213

## Description

### Domaine de l'invention

La présente invention concerne un rehausseur pour équiper un siège notamment de véhicule ou plus généralement de siège tel qu'une chaise et recevoir un enfant.

### Etat de la technique

On connaît des rehausseurs de siège de véhicule pour recevoir un enfant, notamment constitué par un socle formant une assise et muni d'un revêtement d'habillage en matière textile, plastique ou autre.

Ce rehausseur, moulé en une seule pièce, présente l'inconvénient de ne pas s'adapter par ses caractéristiques de forme et d'aspect, à l'esthétique d'un siège de véhicule et un confort unique, c'est-à-dire que les caractéristiques de souplesse ou de dureté du rehausseur ne peuvent être modifiées à la demande. Elles résultent de la fabrication et toutes les caractéristiques d'un rehausseur d'une série de fabrication sont les mêmes.. En outre, il est difficile à nettoyer et sans confort.

Le document DE 30 20 949 A1 Autoflug GmbH du 10 décembre 1981, décrit un rehausseur du type défini ci-dessus. Le rehausseur équipe un siège de véhicule pour recevoir un enfant et se compose d'un socle 10 formé d'un fond 15 bordé par deux côtés 12, un bord avant et un bord arrière délimitant avec le bord avant, le bord arrière et le fond 15, un logement 14 pour une assise 20, amovible. L'assise amovible 20 est réalisée en une matière différente de celle du socle 10 avec une forme complémentaire à celle du logement 14.

### But de l'invention

La présente invention a pour but de développer un rehausseur pour siège de véhicule, destiné à recevoir un enfant et permettre de l'attacher à une ceinture de sécurité, qui puisse se réaliser avec une très grande diversité de caractéristiques de forme et d'aspect, et de confort et adaptable aux caractéristiques esthétiques du siège du véhicule ou de la décoration intérieure du véhicule, et de pouvoir se nettoyer facilement et, le cas échéant, se remplacer à moindre coût tout en étant d'une fabrication simple et économique. Le rehausseur doit également pouvoir s'adapter à la demande pour présenter outre les caractéristiques esthétiques compatibles avec l'emplacement auquel il est destiné, également des caractéristiques de souplesse variant dans une très large gamme.

### Exposé et avantages de l'invention

A cet effet, l'invention, qui est définie par les caractéristiques techniques de la revendication indépendante, concerne un rehausseur se composant d'un socle formé d'un fond bordé par deux côtés, un bord avant et un bord arrière, délimitant le bord arrière et le fond, un logement pour une assise amovible, le fond ayant des moyens de fixation de l'assise, l'assise amovible étant réalisée en une matière indépendante de celle du socle avec une forme complémentaire à celle du logement.

Le socle avec son assise amovible sont à la fois intéressants pour la fabrication du rehausseur, pour son entretien et son usage.

La fabrication se fait avantageusement par des opérations distinctes, l'une concernant la fabrication du socle, l'autre celle de l'assise amovible. Cela permet une très grande diversité de matières, de structures et d'aspects pour le socle et pour l'assise permettant des combinaisons intéressantes tant du point de vue du confort et de la sécurité que de l'aspect et de l'intégration du rehausseur dans un habitacle de véhicule ayant son décor propre (nature des matériaux des sièges, des garnitures et couleur). Comme l'assise est amovible et qu'elle peut être réalisée dans une très large gamme de souplesse, outre les caractéristiques esthétiques et de matières extérieures, cela permet d'adapter le rehausseur aux caractéristiques souhaitées par l'utilisateur ou nécessaires à l'utilisateur, c'est-à-dire un siège plus ou moins souple, plus ou moins dur en fonction du poids et des desideratas de l'utilisateur.

L'entretien du rehausseur est facilité puisque l'assise se détache du socle et permet un nettoyage séparé. L'assise peut être remplacée après usure d'autant plus qu'étant de préférence en une matière souple et donc plus fragile que le socle qui est en une matière plus rigide, elle subit une usure plus prononcée et se dégrade plus rapidement.

Bien que l'assise soit engagée par une complémentarité de forme dans le logement du socle, il est intéressant que le dessous de l'assise soit muni d'attaches pour être fixé au fond du socle.

Suivant une autre caractéristique, le socle est une pièce en mousse semi-rigide, notamment réalisé par injection ou une pièce creuse réalisée par rotomoulage. Il présente une structure de surface esthétique ou encore il est revêtu partiellement d'une matière, notamment d'une matière textile.

L'assise est de préférence une pièce en mousse souple recouverte d'un revêtement qui peut être un revêtement textile, un non-tissé, du cuir, une matière plastique ou une combinaison de ces matières.

Le revêtement de l'assise est appliqué de préférence sur le dessus et au moins sur une partie des côtés, pour les parties apparentes lorsque l'assise est installée dans le logement du socle. Le revêtement appliqué sur le dessus et les surfaces latérales de l'assise est fixé par collage, par la mise en place du revêtement, directement dans le moule avant l'injection de la matière de l'assise. Le revêtement peut également être appliqué sur l'assise en sortie du moule.

Suivant une autre caractéristique avantageuse, la fixation de l'assise au logement du socle se fait par des moyens d'assemblage et de fixation constitués par au moins un passage réalisé dans le fond du socle et au moins une cloison en position du dessous de l'assise, de façon que cette cloison en relief formant un bossage, pénètre par complémentarité de forme dans le passage du fond du socle et complète ainsi l'accrochage de l'assise au socle. Cette cloison peut comporter des liens tels que des fils ou des cordelettes nouées au niveau du fond du socle.

L'assise peut également être constituée par une poche de type pouf, c'est-à-dire une poche contenant des granulés et qui se déforme en fonction de l'empreinte du corps. Cette forme d'assise convient tout particulièrement pour les enfants très légers, qui peuvent ainsi bien se mouler dans l'assise et avoir une tenue plus confortable du fait de l'augmentation de la surface de contact avec l'assise.

Cette assise est constituée soit par une poche unique contenant les billes ou granulés ou chips, par exemple en polystyrène ou en polypropylène. Il peut également s'agir d'une enveloppe extérieure assurant l'aspect décoratif de l'assise et d'une enveloppe intérieure contenant les billes, l'enveloppe intérieure étant fermée définitivement alors que l'enveloppe extérieure s'ouvre par exemple par une fermeture à tirette, prévue sur le dessous.

Cette assise déformable à la manière d'un pouf se fixe avantageusement au socle par des bandes à griffes que l'on fait passer dans les ouvertures du fond du socle pour les attacher entre elles et solidariser ainsi l'assise au socle.

Suivant une autre caractéristique avantageuse, la face extérieure et le dessus des côtés ont des gorges de la largeur d'une ceinture de sécurité ; ces gorges remontent des côtés près du bord arrière du socle pour déboucher au-dessus des côtés et réaliser une liaison mécanique par la forme avec la ceinture pour la bloquer au socle.

### Dessins

La présente invention sera décrite ci-après de manière plus détaillée à l'aide d'exemples de réalisation de rehausseurs représentés dans les dessins annexés dans lesquels :
- la figure 1 est une vue en perspective d'un rehausseur selon l'invention,
- la figure 2 est une vue de dessus du rehausseur de la figure 1,
- la figure 3 est une vue de dessus du socle du rehausseur,
- la figure 4 est une vue en coupe transversale selon IV IV du socle de la figure 3,
- la figure 5 est une coupe longitudinale selon VV du rehausseur de la figure 2,
- la figure 6 est une coupe longitudinale d'un mode de réalisation de coussins de rehausseur selon la figure 1,
- la figure 7 est une vue en coupe longitudinale selon le tracé VII VII indiqué à la figure 3 et correspondant à un autre mode de réalisation d'un rehausseur,
- la figure 8 est une coupe longitudinale de l'assise du rehausseur de la figure 7.

### Description de modes de réalisation de l'invention

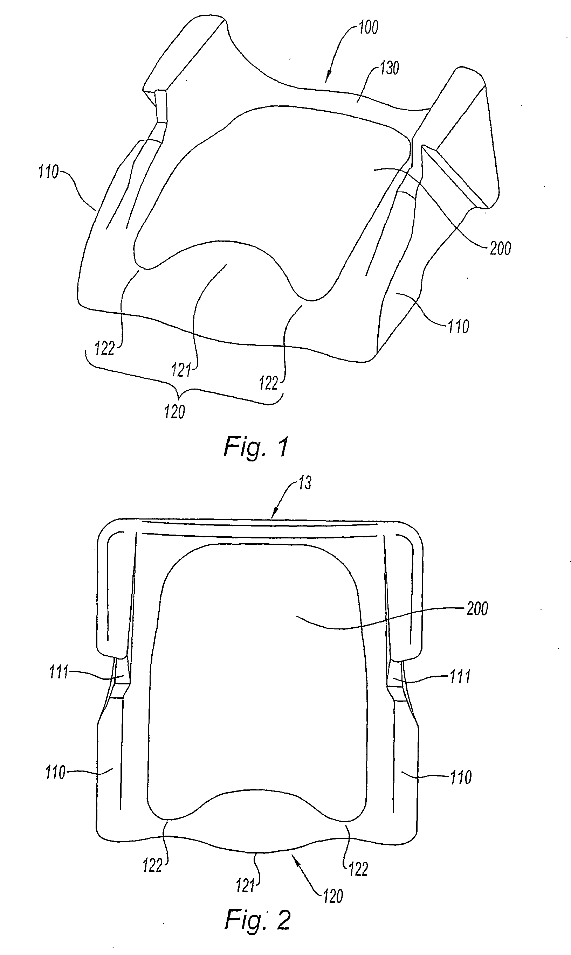

Selon les figures 1 et 2, l'invention concerne un rehausseur pour enfant qui s'installe sur un siège de véhicule et se fixe avec l'enfant à l'aide de la ceinture de sécurité du siège.

Le rehausseur se compose d'un socle 100 formé d'un fond couvert par une assise amovible 200 et bordé par deux côtés 110, un bord avant 120 et un bord arrière 130.

Le bord avant 120 comporte une partie centrale bombée 121 avec de part et d'autre une partie en creux 122 pour supporter les cuisses de l'enfant. Les côtés 110 sont relevés avec une forme bombée et arrondie pour assurer la tenue latérale du bassin de l'enfant. Ces bords 110 sont munis d'une gorge 111 remontant extérieurement pour recevoir la ceinture de sécurité.

Vers l'arrière, les côtés 110 sont relevés et rejoignent le bord arrière 130 plus bas ; le bord avant 120, le bord arrière 130 et les côtés 110 délimitent le logement 140 recevant l'assise amovible 200. Le socle 100 est réalisé en une matière plastique moulée ou injectée, relativement rigide et l'assise amovible 200 est en une matière souple, assurant le confort.

L'aspect de surface du socle 100 et de l'assise amovible 200, la couleur ainsi que les matières de l'assise amovible sont choisis en fonction de considérations esthétiques.

Le socle 100 et l'assise 200 seront décrits de manière plus détaillée à l'aide des figures suivantes.

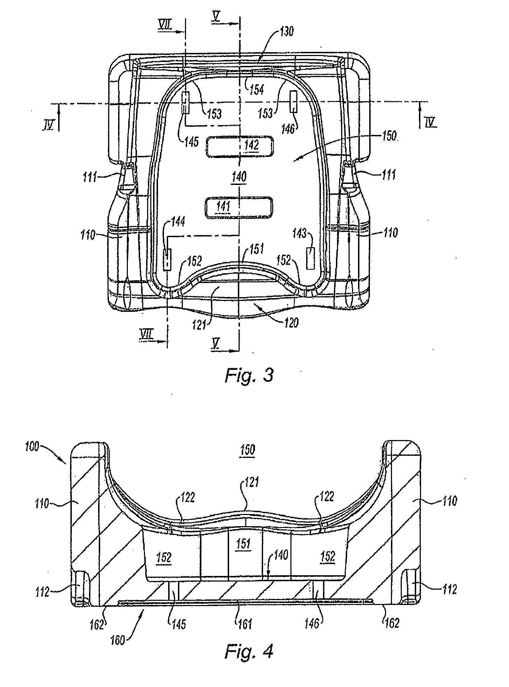

Ainsi, selon les figures 3, 4 et 5, le socle 100 est une pièce en mousse semi-rigide, pleine, délimitant, par son bord avant 120, son bord arrière 130 et ses côtés 110 et son fond 140, un logement 150 sensiblement rectangulaire, avec un bord avant 151 rentrant et des coins arrondis en saillie 152, une forme légèrement rétrécie vers l'arrière et des coins arrière 153 arrondis, le bord arrière 154 étant droit, pour recevoir l'assise amovible de forme complémentaire. Le fond 140 du logement 150 comporte deux passages 141, 142 de dimensions relativement importantes, permettant la fixation de l'assise amovible ainsi que des passages 143, 146 plus petits, par exemple près des coins 152, 153, et traversant également le fond 140 pour permettre d'évacuer l'air lors de la mise en place de l'assise dans le logement 150.

En section verticale, comme le montre la figure 4, le logement 150 a une forme légèrement évasée pour faciliter la mise en place de l'assise amovible.

Par ses côtés 110 et la forme du bord avant 120, le socle 100 constitue une sorte de siège baquet, complété par le dossier du siège (non représenté) du véhicule que rejoint le côté arrière 130 du rehausseur.

La face extérieure des côtés 110 comporte une gorge 111 pour le passage d'une ceinture de sécurité. Les deux gorges 111 débouchent au-dessus des côtés 110 ; elles ont une largeur suffisante pour recevoir la ceinture de sécurité tout en réalisant une liaison mécanique par la forme avec la ceinture, pour caler le rehausseur au siège et pouvoir passer au plus près du dessus du bassin de l'enfant installé dans le rehausseur.

Le dessous 160 du socle 100 est creux à la fois à la base 112 des côtés 110 et dans la partie centrale 161 de sorte que le fond s'appuie sur la surface d'assise du siège du véhicule par un appui périphérique 162, de manière à permettre une tenue plus ferme sur l'assise du siège que si le dessous 160 était plat sur toute sa surface.

L'assise amovible 200 selon le mode de réalisation représenté aux figures 1, 2, 5 et 6 est une pièce en mousse souple, avec des cavités 210, 211, 212 dans le fond, un bord 220 et des cloisons formant des tenons 221, 222.

La section de l'assise 200 correspond à la section horizontale du logement 150 (figure 3) et les cavités du dessous de l'assise 200 améliorent sa souplesse. Ces cavités permettent également de réduire la quantité de matière utilisée pour la fabrication de l'assise sans que cela ne soit au détriment des caractéristiques physiques et dynamiques de celles-ci bien au contraire. Ces cavités sont délimitées par le bord périphérique 220 de l'assise et par les deux tenons 221, 222 transversaux par rapport à la direction longitudinale, qui se prolongent en dessous de la surface d'appui du bord périphérique 220. Ces cloisons ou tenons 221, 222 ont une section rectangulaire adaptée à la forme des passages 141, 142 du fond du socle 100 pour s'y encastrer et compléter l'accrochage de l'assise 200, on laisse du jeu pour éviter la remontée de tissu. Les tenons 221, 222 peuvent se prolonger par des éléments de préhension non représentés tels que des languettes ou des fils, qui permettent de les tirer dans les passages 141, 142 et le cas échéant, de les nouer sous les passages pour retenir l'assise de façon amovible.

Ces cloisons transversales 221, 222 permettent également d'éviter un mouvement de glissement de la partie centrale 240 de l'assise 200, par rapport à son bord 200 sous l'effet d'une décélération de freinage, de façon à éviter que l'enfant ne soit perturbé par ce mouvement de glissement ou même risque de passer sous la boucle de la ceinture à l'occasion d'un freinage très violent. En outre, ces cloisons 221, 222 assurent la tenue de la partie centrale 240 de l'assise tout en permettant une excellente souplesse grâce à la matière de l'assise et aux cavités 210, 211, 212 réalisées dans son dessous.

Au moins certaines de ces cavités créent un effet de coussin d'air par rapport au fond du socle, améliorant l'isolation et l'amortissement des vibrations transmises par le siège au socle.

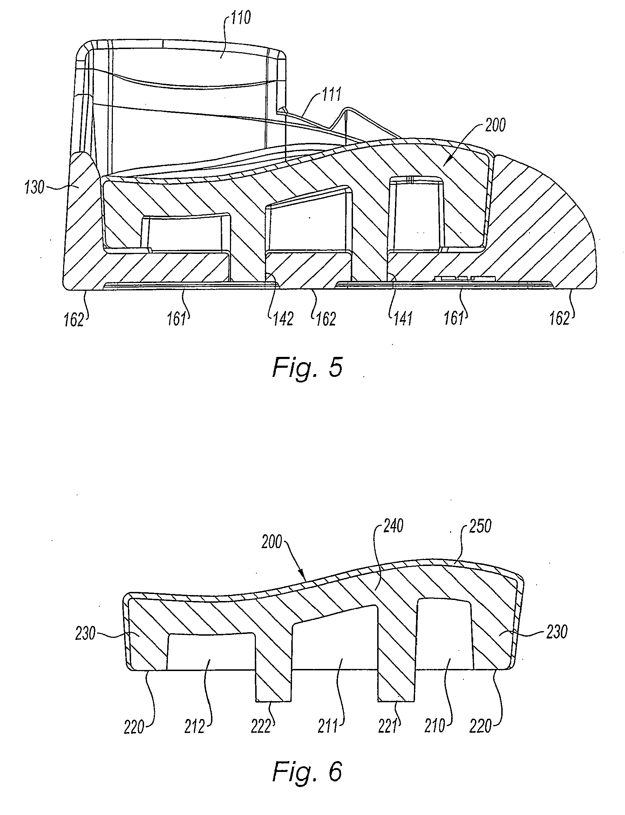

Selon la vue en coupe de la figure 6, l'assise 200 est munie d'un revêtement 250 sur son dessus 240 et sur ses côtés 230.

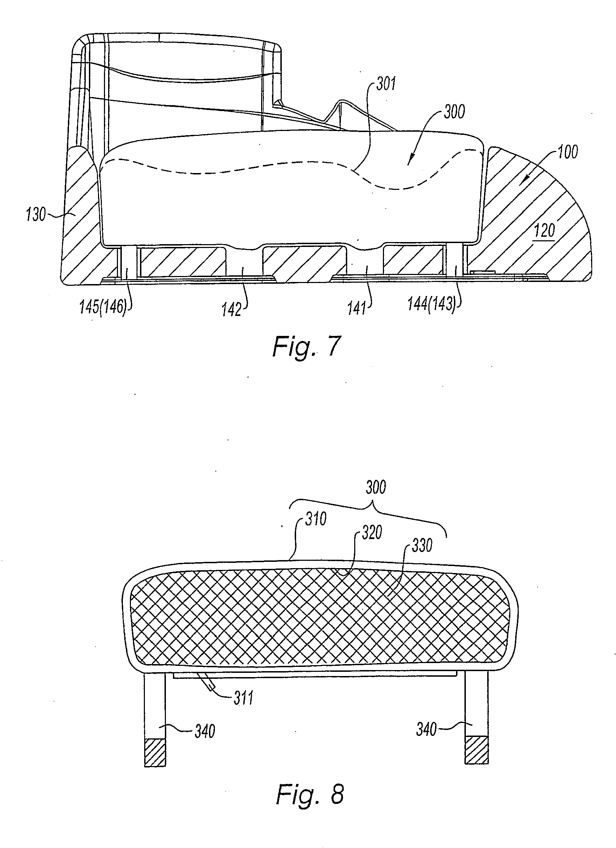

Les figures 7 et 8 montrent un autre mode de réalisation d'un rehausseur selon l'invention.

Ce mode de réalisation se distingue par une autre forme de l'assise amovible 300, le rehausseur 100 étant le même que celui déjà décrit.

Cette variante d'assise 300 est une poche déformable de type pouf, contenant des billes de petite dimension, permettant à la surface de l'assise en contact avec le corps, de se déformer en fonction de la forme du corps et d'augmenter la surface de contact entre le corps et l'assise. Cette déformation et cette adaptation à la forme du corps reposant sur l'assise peut être intéressante soit par l'habitude de l'utilisateur de s'installer sur ce type d'assise soit pour augmenter la surface de contact et par suite la stabilité de l'utilisateur installé dans ce rehausseur.

Un exemple de contour de déformation que peut prendre l'assise est représenté par le trait interrompu 301 à la figure 7.

Cette empreinte n'est pas définitive puisqu'il suffit qu'un autre utilisateur avec une forme de corps légèrement différente, s'installe dans le rehausseur pour que l'assise prenne la forme de la surface de contact ainsi imposée.

La figure 8 montre l'assise 300 sortie du logement. Selon l'exemple de réalisation, cette assise se compose d'une enveloppe extérieure 310 contenant une enveloppe intérieure 320 elle-même chargée des billes qui, sous l'effet d'une poussée, « coulent » en roulant les unes sur les autres, par exemple des billes de polystyrène ou de polypropylène. On peut également prévoir un matériau particulaire, tel que des copeaux (chips) en polystyrène ou polypropylène.

L'enveloppe extérieure 310 est munie sur son dessous, d'une tirette figurée simplement par l'attache 311 permettant de l'ouvrir pour enlever l'enveloppe intérieure 320. cela est nécessaire par exemple pour nettoyer l'enveloppe extérieure 310 sans traiter en même temps et risquer d'abîmer les caractéristiques physiques de la charge de billes 330 placée dans l'enveloppe intérieure 320.

L'enveloppe extérieure 310 comporte également des attaches sous forme de bandes 340 placées sensiblement aux quatre coins de la surface présumée de contact entre l'assise amovible 300 et le fond 140 du socle. Les attaches en forme de ruban 340 sont ainsi situées de préférence au niveau des passages 143, 144, 145, 146 pour passer à travers ceux-ci et être fixées les unes aux autres deux à deux par nouage ou, comme cela est schématisé ici, par l'accrochage des extrémités à griffes des attaches 340. D'autres modes de fixation peuvent être envisagés, tels que des cordelettes.

Comme l'assise amovible 300, déformable n'est pas tenue par une liaison de forme dans son logement, pour éviter qu'elle ne sorte du logement du socle lorsque le socle est enlevé du siège pour être transporté ou rangé, l'assise risquerait de se détacher. Les moyens de fixation 340 évitent cet inconvénient

Les remarques faites ci-dessus à propos de l'esthétique de l'assise amovible s'appliquent également dans ce cas. L'enveloppe extérieure 310 est choisie en fonction des caractéristiques d'aspect ou de caractéristiques fonctionnelles.

L'assise 300 comme l'assise 200 décrite ci-dessus étant amovible et interchangeable, un même utilisateur peut avoir deux assises de types différents pour améliorer son confort voire même sur des longs trajets, modifier l'assise pour que le rehausseur soit encore plus confortable pour un usage prolongé.

## Revendications

1. Rehausseur pour équiper un siège de véhicule et recevoir un enfant, composé d'un socle (100) formé d'un fond (140) bordé par deux côtés (110), un bord avant (120) et un bord arrière (130), délimitant avec le bord avant (120), le bord arrière (130) et le fond (140), un logement (150) pour une assise (200) amovible,
l'assise amovible (200) étant réalisée en une matière indépendante de celle du socle (100) avec une forme complémentaire à celle du logement (150), **caractérisé en ce que**
le fond (140) a des moyens de fixation de l'assise (200).

2. Rehausseur selon la revendication 1,
**caractérisé en ce que**
le dessous de l'assise (200) est muni d'attaches pour être fixé au fond (140) du socle (100).

3. Rehausseur selon la revendication 1,
**caractérisé en ce que**
le fond (140) du socle (100) comporte au moins un passage (141, 142) constituant un moyen de fixation et le dessous de l'assise (200) comporte au moins une cloison formant tenon (221, 222) pénétrant dans le passage (141, 142) du socle pour accrocher l'assise au socle.

4. Rehausseur selon la revendication 1,
**caractérisé en ce que**
le socle (100) est une pièce en mousse semi-rigide notamment réalisé par injection ou une pièce creuse réalisée par rotomoulage et présente une structure de surface esthétique ou est revêtu partiellement d'une matière textile.

5. Rehausseur selon la revendication 1,
**caractérisé en ce que**
l'assise (200) est une pièce en mousse souple, recouverte d'un revêtement textile, d'un non tissé, de cuir, de matière plastique ou d'une combinaison de ces matières ou munie d'un revêtement (250) appliqué sur le dessus (240) et les surfaces latérales (230) par collage directement dans le moule de réalisation de l'assise ou hors du moule.

6. Rehausseur selon la revendication 1,
**caractérisé en ce que**
le dessous (160) du socle (100) est creux à la base (112) des côtés (110) et dans la partie centrale (161) pour former un appui périphérique (162).

7. Rehausseur selon la revendication 1,
**caractérisé en ce que**
la face extérieure et le dessus des côtés (110) ont des gorges (111) de la largeur d'une ceinture de sécurité, ces gorges remontant des côtés près du bord arrière du socle (100) pour déboucher au-dessus des côtés et réaliser une liaison mécanique de blocage de la ceinture au socle lorsque la ceinture est placée.

8. Rehausseur selon la revendication 1,
**caractérisé en ce que**
l'assise amovible déformable (300) comporte une enveloppe intérieure (320) fermée, contenant une charge de billes et cette enveloppe intérieure (320) ainsi chargée se place dans l'enveloppe extérieure (310) munie d'un moyen d'ouverture (311), l'enveloppe extérieure étant munie de pattes d'accrochage (340).

9. Rehausseur selon la revendication 1,
**caractérisé en ce que**
le logement (150) est de forme sensiblement rectangulaire avec un bord avant (151) rentrant et des coins (152) arrondis, venant en saillie.

10. Rehausseur selon la revendication 1,
**caractérisé en ce que**
le bord avant (120) du socle (100) comporte une partie centrale bombée (121) avec, de part et d'autre, une partie en creux (122).

11. Rehausseur selon la revendication 1,
**caractérisé en ce que**
les côtés (110) sont relevés avec une forme bombée et arrondie pour assurer la tenue latérale du bassin.

## Claims

1. Raiser for fitting to a car seat and accommodating an infant, composed of a pedestal (100) formed from a base (140) bounded by two side pieces (110), a front edge (120) and a rear edge (130), delimiting with the front edge (120), the rear edge (130) and the base (140), a housing (150) for a portable seat (200),
said portable seat (200) being made of a material independent of that of the pedestal (100) with a shape complementary to that of the housing (150),
**characterised in that**
the base (140) has means for fixing the seat (200).

2. Raiser according to claim 1,
**characterised in that**
the undersurface of the seat (200) is provided with fasteners for fixing to the base (140) of the pedestal (100).

3. Raiser according to claim 1,
**characterised in that**
the base (140) of the pedestal (100) includes at least one hole (141, 142) constituting a fixing means and the undersurface of the seat (200) includes at least one tenon-forming bulkhead (221, 222) penetrating into the hole (141, 142) of the pedestal for fastening the seat to the pedestal.

4. Raiser according to claim 1,
**characterised in that**
the pedestal (100) is an article made of semi-rigid expanded plastics material produced in particular by injection moulding or a recessed article produced by rotational moulding, and has an aesthetically-pleasing surface structure or is partially covered with a textile material.

5. Raiser according to claim 1,
**characterised in that**
the seat (100) is a piece of flexible expanded plastics material covered with a textile cladding, with a bonded web, with leather, with plastics material or with a combination of these materials or provided with a cladding (250) applied to the upper surface (240) and the lateral surfaces (230) by glueing directly within or outside the mould for producing the seat.

6. Raiser according to claim 1,
**characterised in that**
the undersurface (160) of the pedestal (100) is recessed at the foot (112) of the side pieces (110) and in the central region (161) to form a peripheral support (162).

7. Raiser according to claim 1,
**characterised in that**
the external surface and upper surface of the side pieces (110) have grooves (111) the width of a safety belt, said grooves ascending from the side pieces close to the rear edge of the pedestal (100) to emerge at the top of the side pieces and form a mechanical link for clamping the belt against the pedestal when the belt is in position.

8. Raiser according to claim 1,
**characterised in that**
the deformable portable seat (300) comprises a sealed interior envelope (320) containing a charge of pellets and this interior envelope (320) thus charged is placed into the exterior envelope (310) provided with an opening means (311), the exterior envelope being provided with fastening feet (340).

9. Raiser according to claim 1,
**characterised in that**
the housing (150) is substantially rectangular in shape, with a concave anterior edge (151) and convex, rounded corners (152).

10. Raiser according to claim 1,
**characterised in that**
the anterior edge (120) of the pedestal (100) comprises a domed central portion (121) with a recessed portion (122) on either side.

11. Raiser according to claim 1,
**characterised in that**
the side pieces (110) are enhanced with a domed and rounded shape to ensure lateral securing of the pelvis.

## Patentansprüche

1. Zusatzsitz für einen Fahrzeugsitz und um ein Kind aufzunehmen, bestehend aus einer Art Untersatz (100) mit einem von zwei Seitenteilen (110), einem vorderen Rand (120) und einem hinteren Rand (130) begrenzten Boden (140), wobei die Seitenteile (110) mit dem vorderen Rand (120), dem hinteren Rand (130) und dem Boden (140) eine Aufnahme (150) für eine herausnehmbare Sitzunterlage (200) bilden, wobei die herausnehmbare Sitzunterlage (200) aus einem vom Material des Untersatzes (100) unabhängigen Material in einer zur Form der Aufnahme (150) komplementären Form hergestellt ist,
**dadurch gekennzeichnet, dass** der Boden (140) Befestigungsmittel für die Sitzunterlage (200) aufweist.

2. Zusatzsitz nach Anspruch 1, **dadurch gekennzeichnet, dass** die Unterseite der Sitzunterlage (200) mit Befestigungsmitteln versehen ist, damit sie am Boden (140) des Untersatzes (100) befestigt werden kann.

3. Zusatzsitz nach Anspruch 3, **dadurch gekennzeichnet, dass** der Boden (140) des Untersatzes (100) wenigstens eine ein Befestigungsmittel bildende Durchführung (141, 142) und die Unterseite der Sitzunterlage (200) wenigstens eine einen Zapfen (221, 222) bildende Zwischenwand aufweist, der in die Durchführung (141, 142) des Untersatzes eindringen kann, um die Sitzunterlage am Untersatz zu befestigen.

4. Zusatzsitz nach Anspruch 1, **dadurch gekennzeichnet, dass** der Untersatz (100) ein Teil aus einem halbharten, insbesondere durch Spritzen hergestellten Schaumstoff oder ein durch Rotationsformen hergestelltes hohles Teil ist und eine ästhetische Oberflächenbeschaffenheit aufweist oder teilweise mit einem textilen Material überzogen ist.

5. Zusatzsitz nach Anspruch 1, **dadurch gekennzeichnet, dass** es sich bei der Sitzunterlage (200) um ein Teil aus einem weichen Schaumstoff handelt, das mit einem textilen Überzug, einem Überzug aus Vliesstoff, Leder, einem Kunststoff oder einer Kombination aus diesen Materialien verkleidet oder mit einem Überzug (250) versehen ist, der direkt in der Herstellungsform der Sitzunterlage oder außerhalb der Form auf die Oberseite (240) und die Oberflächen der Querseiten (230) aufgeklebt wird.

6. Zusatzsitz nach Anspruch 1, **dadurch gekennzeichnet, dass** die Unterseite (160) des Untersatzes (100) an der Basis (112) der Seitenteile (110) und im zentralen Teil (161) ausgehöhlt ist, um am Umfang eine Abstützung (162) auszubilden.

7. Zusatzsitz nach Anspruch 1, **dadurch gekennzeichnet, dass** die Außenseite und die Oberseite der Seitenteile (110) Hohlkehlen (111) in der Breite eines Sicherheitsgurtes aufweisen, wobei diese Hohlkehlen an den Seitenteilen in der Nähe des hinteren Randes des Untersatzes (100) hoch geführt sind, um an der Oberseite der Seitenteile auszulaufen und eine mechanische Festspann-Verbindung des Gurtes am Untersatz herbeizuführen, wenn der Gurt angelegt ist.

8. Zusatzsitz nach Anspruch 1, **dadurch gekennzeichnet, dass** die herausnehmbare verformbare Sitzunterlage (300) eine geschlossene innere Umhüllung (320) aufweist, die eine Kugelfüllung enthält, und diese so gefüllte innere Umhüllung (320) in die äußere, mit einem Mittel zum Öffnen (311) versehenen Umhüllung (310) eingesetzt ist, wobei die äußere Umhüllung mit Befestigungslaschen (340) versehen ist.

9. Zusatzsitz nach Anspruch 1, **dadurch gekennzeichnet, dass** die Aufnahme (150) eine annähernd rechteckige Form mit einem eingezogenen vorderen Rand (151) und abgerundeten vorspringenden Ecken (152) hat.

10. Zusatzsitz nach Anspruch 1, **dadurch gekennzeichnet, dass** der vordere Rand (120) des Untersatzes (100) einen zentralen bauchigen Teil (121) und beidseits davon einen nach innen gewölbten Teil (122) aufweist.

11. Zusatzsitz nach Anspruch 1, **dadurch gekennzeichnet, dass** die Seitenteile (110) in einer gewölbten und abgerundeten Form hoch stehen, um einen seitlichen Halt für das Becken zu gewährleisten.
